# EUROPEAN PATENT APPLICATION

(11) **EP 4 796 425 A1**
(43) Date of publication of application: **26.08.2026**
(21) Application number: 24879010.7
(22) Date of filing: 16.10.2024
(51) Int. Cl.: B62M 6/65, B62M 11/18, B62M 11/16, B60L 7/10, B62M 23/00

(54) **STEPLESS SPEED CHANGE DEVICE FOR HUB MOTOR**

(30) Priority: 18.10.2023 CN 202311350649
(71) Applicant: Shanghai Chucai Sisheng Technology Partnership Enterprise (Limited Partnership), Shanghai 201805 (CN)
(72) Inventor: ZHANG, Ruchu, Shanghai 201805 (CN)
(74) Representative: Franke, Dirk
(86) International application number: PCT/CN2024/125104
(87) International publication number: WO 2025/082368

(57) **Abstract**

This application belongs to the technical field of electric bicycles, and specifically relates to a continuously variable transmission device for a hub motor, including a main shaft, a motor assembly, a hub, a planetary gear set assembly and a flywheel. The hub, the planetary gear set assembly and the flywheel are sequentially sleeved on the main shaft. The planetary gear set assembly includes at least a first planetary gear set and a second planetary gear set connected to each other along an axial direction of the planetary gear set assembly. One end of a sun gear of the first planetary gear set extends into the hub and connected to the motor assembly. One end of planet carrier of the first planetary gear set is connected to the hub, and its another end is connected to the sun gear of the second planetary gear set. One end of planet carrier of the second planetary gear set is connected to its planet gear, and its another end is connected to the flywheel. In this application, power of the flywheel and the motor is coupled and output to the wheel through the hub, which realizes functions of power assist and continuously variable transmission and can achieve a large speed ratio and enable the motor assembly to run at a high speed with low torque, thereby facilitating lightweight design of the mechanism.

## Description

### Related Application

This application claims the priority of Chinese Invention Application No. 202311350649.1, filed on October 18, 2023 and entitled "CONTINUOUSLY VARIABLE TRANSMISSION DEVICE FOR HUB MOTOR".

### Field of the Invention

The present invention belongs to the technical field of electric bicycles, and specifically relates to a continuously variable transmission device for a hub motor.

### Background

Motors of general power-assisted bicycles are installed on bottom brackets or rear hubs, and manually adjustable transmissions are provided on flywheels of the rear hubs. The motors installed on the bottom brackets are located at front ends of the transmissions, resulting in long transmission paths and low efficiency, despite with adjustable speed ratios of the motors. The motors installed on the hubs are located at rear ends of the transmissions, resulting in shorter transmission paths, high efficiency, but with nonadjustable speed ratios of the motors. The transmissions are provided with multi-stage gears on the flywheels, and gear shifting is realized by shifting chains through shift forks. The transmissions are exposed to the air, leading to cross-contamination between gear oil and the environment. When the gears are contaminated with dust and silt, transmission efficiency is compromised.

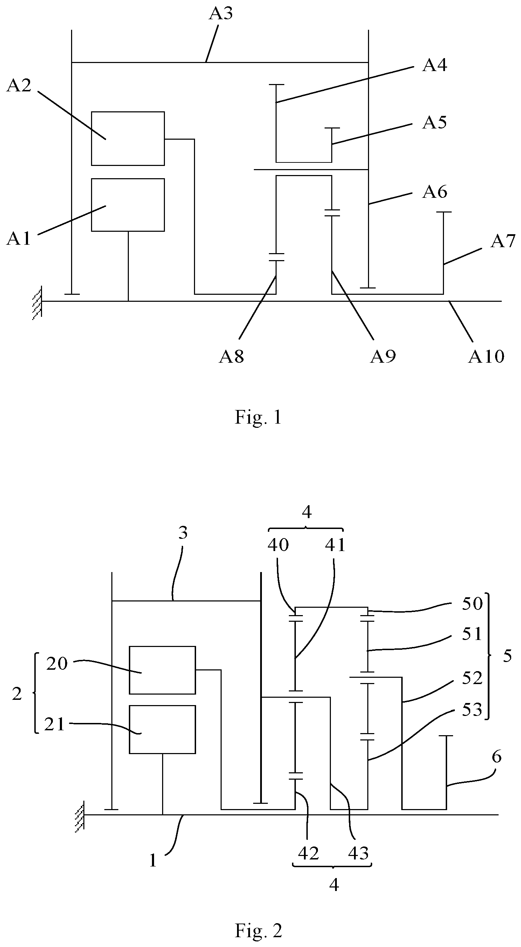

Patent CN201410145608.3 discloses a hub motor device for an electric bicycle. In its technical solution of the hub motor device, a transmission and a motor are both integrated into the hub, and a planetary mechanism (type WW) is used to couple the power of the motor and the flywheel to output to the wheel, thereby realizing power assistance and continuously variable transmission functions. Referring to Fig. 1 of the present specification, the hub motor device for an electric bicycle includes stator A1, rotor A2, hub A3, first planetary gear A4, second planetary gear A5, planet carrier A6, first flywheel A7, first sun gear A8, second sun gear A9 and first main shaft A10. The stator A1, rotor A2, first planetary gear A4, second planetary gear A5, planet carrier A6, first sun gear A8, second sun gear A9 and first main shaft A10 are installed inside the hub A3; and the first flywheel A7 is installed on the outer side of the hub A3. The hub A3 is rotatably connected to the first main shaft A10.

The first planetary gear A4 and the second planetary gear A5 are integrated together and coaxially installed on the planet carrier A6. The planet carrier A6 is connected to the hub A3 to output power. The stator A1 is fixed on the first main shaft A10. The first sun gear A8 is connected to the rotor A2 and meshes with the first planetary gear A4. The second sun gear A9 is connected to the first flywheel A7 and meshes with the second planetary gear A5. A transmission relationship of the planetary mechanism is determined by the following formulae: ${n}_{s 1} + {k}_{0} ∗ {n}_{{k}_{0}} = \left({k}_{0}+1\right) {n}_{s 2}$ ${k}_{0} = \frac{{z}_{{s}_{2}} {z}_{{p}_{1}}}{{z}_{{s}_{1}} {z}_{{p}_{2}}} - 1$ where nₛ₁, n_{k₀} and nₛ₂ are rotational speeds of the first sun gear A8, planet carrier A6 and second sun gear A9 respectively, which are also rotational speeds of the rotor A2, hub A3 and first flywheel A7. k₀ denotes a speed ratio of a planetary gear set assembly consisting of the first planetary gear A4, second planetary gear A5 and planet carrier A6. Z_{s₁}, Z_{s₂}, Z_{P₁} and Z_{P₂} are the numbers of teeth of the first sun gear A8, second sun gear A9, first planetary gear A4 and second planetary gear A5 respectively.

This technical solution has the following problems: 1. The first sun gear A8 and second sun gear A9 rotate in the same direction relative to the planet carrier A6; and it can be learned from the mechanical principles that the WW-type planetary mechanism in this technical solution is a positive-sign mechanism, resulting in low transmission efficiency during vehicle operation, increased load on various components, aggravated friction and wear during operation, shortened service life of parts, and increased maintenance costs. 2. Due to structural constraints between planetary gear sets, generally $\frac{{z}_{{s}_{2}}}{{z}_{{p}_{2}}} \leq 3$; and $\frac{{z}_{{p}_{1}}}{{z}_{{s}_{1}}} \leq$ 2. It can be learned from the formula (1) and formula (2) that k₀ ≤ 5, and when nₛ₂ = 0, $\frac{{n}_{{s}_{1}}}{{n}_{{k}_{0}}} = - {k}_{0} = - 5$. That is, the maximum speed ratio of the motor to the wheel is equal to 5. Because the maximum speed ratio is relatively small, the motor operates at a low speed and high torque. According to the formula, the total motor torque $T = \left(\overline{B}\overline{A}\right) \times \left(πDL\right) \times \frac{D}{2} = \frac{π}{2} \left(\overline{B}\overline{A}\right) {D}^{2} L$, where L represents a length of the motor rotor; D represents a diameter of the motor rotor; A represents a current per unit width; and B represents a radial magnetic flux density. Therefore, it can be seen that D²L is proportional to the volume of the motor rotor. The torque is determined by defining the rotor volume and load (the load depends on A and B), and the overall volume of the motor is determined by the torque.Therefore, high motor torque leads to a relatively large motor volume, resulting in a bulky overall structure of the hub motor device of the electric bicycle and an increased driving load on the motor device. Therefore, a transmission device for a power-assisted bicycle that can resolve the existing problems is needed.

The existing technologies still have the following problems: The bottom bracket motor (central axis motor) can only output power in one direction. If the bottom bracket motor is driven to rotate by the wheel, pedals disengage from feet of a rider, which violates general bicycle riding habits and causes safety hazards. Conventional hub motors can enable coasting regenerative power generation, but lack speed variation, resulting in poor vehicle performance. The transmissions provided in bottom bracket motor systems and conventional hub motor systems are exposed to the air, leading to cross-contamination between gear oil and the environment. When the gears are contaminated with dust and silt, transmission efficiency is compromised. For the internal transmission of the hub motor in the existing technology, the feet of the rider need to be applied force to keep the rotational speed of the flywheel at zero during regenerative power generation for coasting, which violates bicycle riding habits and easily causes safety hazards.

### Summary

In view of disadvantages of the prior art, the present invention proposes a continuously variable transmission device for a hub motor, in which a planetary gear set assembly is used to couple power of a flywheel (flywheel serving as an input end) and a motor, and outputs coupled power to a wheel via a hub (hub serving as an output end). The rotational speed of the wheel is jointly determined by rotational speeds of the flywheel and the motor, which can realize both functions of power assist and continuously variable transmission, achieve a large speed ratio and enable a motor assembly to run at a high speed with low torque, thereby facilitating lightweight design of the mechanism.

To achieve the technical objective of the present invention, the following technical solutions are used in the present invention.

A continuously variable transmission device for a hub motor, including a main shaft, a motor assembly, a hub, a planetary gear set assembly, and a flywheel, where the hub, the planetary gear set assembly and the flywheel are sequentially sleeved on the main shaft, and the motor assembly is sleeved on the main shaft and located inside the hub;
the planetary gear set assembly includes at least a first planetary gear set and a second planetary gear set connected to each other along its axial direction, and both the first planetary gear set and the second planetary gear set include an external ring gear, a sun gear positioned at a center of the external ring gear, multiple planet gears disposed between the external ring gear and the sun gear, and a planet carrier;
the motor assembly includes a motor rotor and a motor stator, the motor stator is fixedly sleeved on the main shaft, and the motor rotor is connected to the sun gear of the first planetary gear set; and
one end of the sun gear of the first planetary gear set extends into the hub to be connected to the motor assembly; planet carrier of the first planetary gear set extends through planet gear in the first planetary gear set, the planet carrier of the first planetary gear set has an end connected to the hub, and has another end connected to the sun gear of the second planetary gear set; the planet carrier of the second planetary gear set has an end connected to planet gear in the second planetary gear set, and has another end connected to the flywheel; and the external ring gear of the first planetary gear set is fixedly connected to the external ring gear of the second planetary gear set.

Preferably, the continuously variable transmission device for a hub motor further includes a first one-way clutch and a second one-way clutch; and the first one-way clutch is configured to connect or disconnect the sun gear of the second planetary gear set and the planet carrier of the second planetary gear set, and the second one-way clutch is configured to connect or disconnect the flywheel and the main shaft; and
the first one-way clutch is used for a starting condition of the continuously variable transmission device for a hub motor, where in the starting condition, the second one-way clutch is either not installed or in a disengaged state; and the second one-way clutch is used for a coasting regenerative power generation condition of the continuously variable transmission device for a hub motor, where in the coasting regenerative power generation condition, the first one-way clutch is either not installed or in a disengaged state.

Further, a power assist ratio λ of the continuously variable transmission device for a hub motor is determined by the following formula:$λ = \frac{{P}_{MG}}{{P}_{FW}} = \frac{{T}_{MG} ∗ {n}_{MG}}{{T}_{FW} ∗ {n}_{FW}} = \frac{{n}_{MG}}{k ∗ {n}_{FW}} ;$ ; where λ denotes the power assist ratio; P_{MG} denotes input power of the motor assembly; P_{FW} denotes input power of the flywheel; T_{MG} denotes torque of the motor assembly; T_{FW} denotes torque of the flywheel; n_{MG} denotes a rotational speed of the motor assembly; N_{FW} denotes a rotational speed of the flywheel; and k denotes a total speed ratio of the planetary gear set assembly.

Further, a total speed ratio k of the planetary gear set assembly is determined by the following formula: $k = {k}_{1} + {k}_{1} / {k}_{2}$ where k₁ denotes a speed ratio of the first planetary gear set; and k₂ denotes a speed ratio of the second planetary gear set.

Further, a rotational speed relationship among the motor assembly, the hub and the flywheel of the continuously variable transmission device for a hub motor is determined by the following formula: ${n}_{MG} + k ∗ {n}_{FW} = \left(1+k\right) {n}_{W}$ where n_{MG} denotes a rotational speed of the motor assembly; n_{FW} denotes a rotational speed of the flywheel; and n_{W} denotes a rotational speed of the hub.

Further, a torque relationship among the motor assembly, the hub and the flywheel of the continuously variable transmission device for a hub motor is determined by the following formula: ${T}_{MG} : {T}_{FW} : {T}_{W} = 1 : k : \left(k+1\right)$ where T_{MG} denotes torque of the motor assembly; T_{FW} denotes torque of the flywheel; and T_{W} denotes torque of the hub.

Further, the first planetary gear set and the second planetary gear set constitute a power split device, and a power flow of the power split device of the continuously variable transmission device for a hub motor is determined by the following formula: ${P}_{W} = {P}_{MG} + {P}_{FW}$ where P_{W} denotes output power of the hub; P_{MG} denotes input power of the motor assembly; and P_{FW} denotes input power of the flywheel.

Further, the motor assembly includes a motor rotor and a motor stator, the motor stator is fixedly sleeved on the main shaft, and the motor rotor is connected to the sun gear of the first planetary gear set.

Further, a bearing is disposed in a central hole of the planetary gear of the first planetary gear set, the planet carrier of the first planetary gear set is provided with multiple planetary gear shafts, the multiple planetary gear shafts are cylindrical rods, and the multiple planetary gear shafts respectively pass through central holes of the planetary gears of the first planetary gear set; and
the planetary gear and planet carrier of the second planetary gear set have the same connection structure as the planetary gear and planet carrier of the first planetary gear set.

Further, the continuously variable transmission device for a hub motor further includes a brake, where the brake is connected to both a external ring gear of the first planetary gear set and a external ring gear of the second planetary gear set; and
the brake is used for a high-speed pure human-powered riding condition of the continuously variable transmission device for a hub motor, where in the high-speed pure human-powered riding condition, the first one-way clutch and the second one-way clutch are either not installed or in a disengaged state.

The beneficial effects of the present invention are as follows:
Firstly, in the present invention, by introducing the second planetary gear set to the planetary mechanism and specially connected to the first planetary gear set, fixedly connecting the external ring gears to each other, connecting the sun gear of the planetary mechanism in the foremost row to the rotor of the motor, connecting the sun gear of the planetary mechanism in the rear row to the planet carrier in the previous row, and connecting the planet carrier of the planetary mechanism in the latter row to the flywheel, a larger speed ratio is achieved compared with a single planetary gear set through coupling, and there is no power circulation between the planetary gear sets. Through the special connection to the motor, flywheel and hub, the planetary mechanism achieves dual advantages of a high speed ratio of the motor to the wheel and a high speed ratio of the flywheel to the wheel. According to the principle of the formula (n_{MG} + k * n_{FW} =(1 + k)n_{w}), the rotational speed of the hub of the continuously variable transmission device for a hub motor in the invention is jointly determined by the rotational speeds of the motor and the flywheel, thereby realizing continuous stepless adjustment. According to the principle of the formula ( $λ = \frac{{P}_{MG}}{{P}_{FW}} = \frac{{T}_{MG} ∗ {n}_{MG}}{{T}_{FW} ∗ {n}_{FW}} = \frac{{n}_{MG}}{k ∗ {n}_{FW}}$), for a planetary mechanism with a speed ratio k, λ matches the speed ratio of the motor assembly to the flywheel, so that the power assist ratio λ can be adjusted under different road conditions and accelerations.
Secondly, in a preferred embodiment, the dual planetary gear set mechanism in the present invention increases the rotational speed of the motor and reduces the motor torque, resulting in a smaller motor size and facilitating lightweight structural design. The dual planetary gear sets in the present invention are both NGW-type planetary gear sets, which belong to negative-sign mechanisms. There is no power circulation between the planetary gear sets, which realizes high transmission efficiency, thereby effectively resolving problems of a large motor size, a heavy mechanism and low transmission efficiency in the prior art.
Thirdly, in a preferred embodiment, the present invention realizes a coasting regenerative power generation function. The one-way clutch is added between the flywheel and the main shaft. Under the coasting condition, the motor applies negative torque, the flywheel is reversely locked by the main shaft, and therefore, the regenerative power generation of the motor does not affect a riding habit.
Fourthly, in a preferred embodiment, the present invention realizes a dual-gear human-powered function, with a low gear speed ratio of 1 and a high gear speed ratio (k₂ + 1). The first one-way clutch is arranged between the second planet carrier and the second sun gear. The first one-way clutch engages when the rotational speed of the flywheel is higher than that of the hub, thereby providing a low speed gear for pure human-powered riding without motor assistance.
Fifthly, in a preferred embodiment, in the present invention, a brake is provided on the external ring gear of the dual planetary gear sets, which adds a high speed gear for the pure human-powered riding. When the bicycle reaches a speed triggering the motor assist limit, the brake engages, the motor idles, and the bicycle can continue to be propelled by power input through the flywheel.
Sixthly, in a preferred embodiment, the dual-gear human-powered function in the present invention can also provide a limp-home function for the system. When the power assist system malfunctions, the bicycle can still be ridden manually to avoid breakdown.
Seventhly, the planetary gear set mechanism in the present invention is enclosed by a housing and installed on the main shaft, which eliminates chain drive and allows the use of belt drive or enclosed shaft drive, thereby avoiding cross-contamination between the transmission system and the environment and improving transmission efficiency during operation.

### Brief Description of Drawings

Fig. 1 is a simplified schematic structural diagram of a continuously variable transmission device for a hub motor in the prior art;
Fig. 2 is a simplified schematic structural diagram of a continuously variable transmission device for a hub motor according to Embodiment 1 of the present invention;
Fig. 3 is a vector diagram of a power-assisted condition of a continuously variable transmission device for a hub motor according to Embodiment 1 of the present invention;
Fig. 4 is a simplified schematic structural diagram of a continuously variable transmission device for a hub motor according to Embodiment 2 of the present invention;
Fig. 5 is a vector diagram of a starting condition of a continuously variable transmission device for a hub motor according to Embodiment 2 of the present invention;
Fig. 6 is a vector diagram of a coasting regenerative power generation condition of a continuously variable transmission device for a hub motor according to Embodiment 2 of the present invention;
Fig. 7 is a vector diagram of a high-speed non-power-assisted condition of a continuously variable transmission device for a hub motor according to Embodiment 2 of the present invention;
Fig. 8 is a schematic cross-sectional structure diagram of a continuously variable transmission device for a hub motor according to Embodiment 1 of the present invention;
Fig. 9 is an exploded view of a continuously variable transmission device for a hub motor according to Embodiment 1 of the present invention; and
Fig. 10 is a schematic side view of a planetary mechanism, which is provided for technicians to understand the solution in the present invention.

Where: A1 - stator; A2 - rotor; A3 - hub; A4 - first planetary gear; A5 - second planetary gear; A6 - planet carrier; A7 - first flywheel; A8 - first sun gear; A9 - second sun gear; A10 - first main shaft; 1 - main shaft; 2 - motor assembly; 20 - motor rotor; 21 - motor stator; 3 - hub; 4 - first planetary gear set; 40 - first external ring gear; 41 - first planetary gear; 42 - first sun gear; 43 - first planet carrier; 5 - second planetary gear set; 50 - second external ring gear; 51 - second planetary gear; 52 - second planet carrier; 53 - second sun gear; 6 - flywheel; 7 - first one-way clutch; 8 - second one-way clutch; and 9 - brake.

### Detailed Description of Embodiments

In order that a person skilled in the art may better understand the teachings of the present application, the present invention will now be described in further detail with reference to the accompanying drawings and examples.

The directional terms such as up, down, left, right, front and rear in this application document are created based on the positional relationships shown in the accompanying drawings. The positional relationships may correspondingly vary along with the accompanying drawings, and therefore shall not be construed as limitations on the scope of protection.

In this application, the terms such as "mounted", "connected", "coupled", "linked", and "fixed" should be understood in a broad sense. For example, the terms may refer to a fixed connection, a detachable connection, an integral connection, a mechanical connection, an electrical connection or mutual communication, a direct connection, or an indirect connection via an intermediate medium. The terms may also refer to internal communication between two components or an interaction relationship between two components. A person of ordinary skill in the art can understand specific meanings of these terms in this application as appropriate to specific situations.

### Embodiment 1:

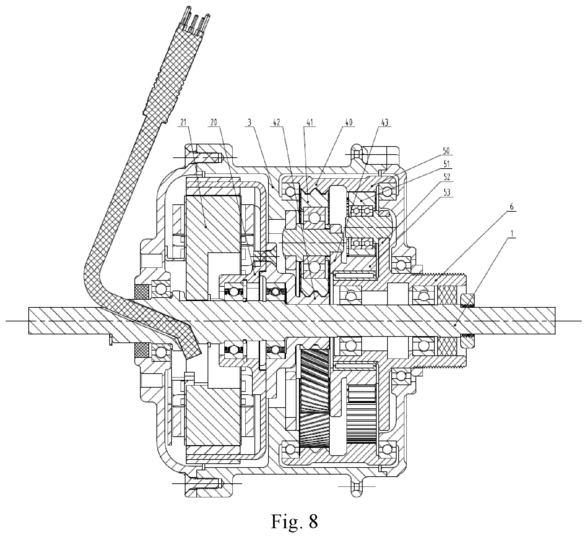

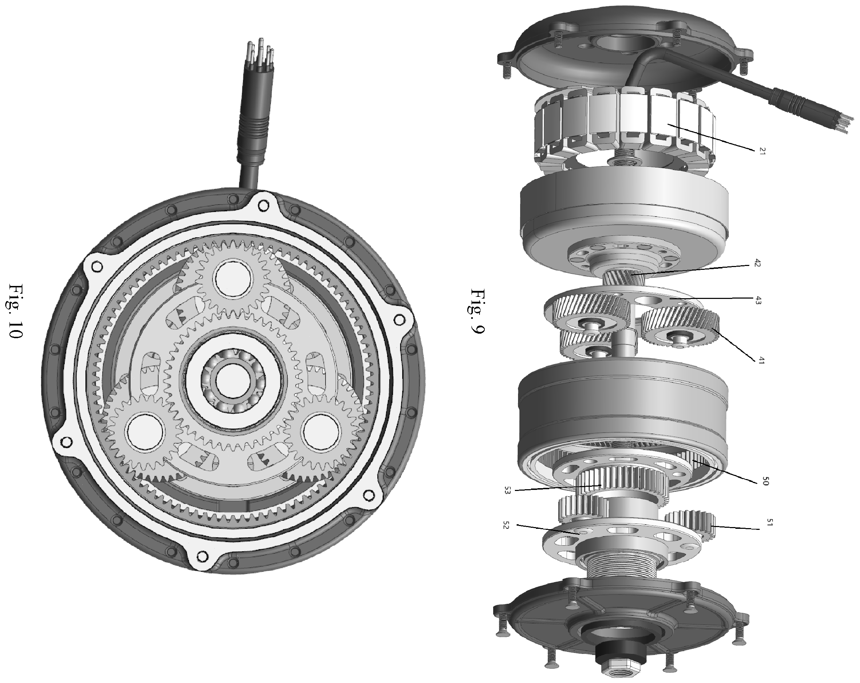

With reference to Fig. 2, Fig. 8 and Fig. 9 of this specification, Fig. 2 is a simplified schematic structural diagram, which illustrates the structure in this embodiment in a simplified drawing method known to a person skilled in the art. Fig. 8 is a schematic cross-sectional structure diagram in this embodiment. For a better understanding of the present invention, Fig. 9 provides a schematic exploded view, where visible parts are correspondingly marked.

As shown in the figures, the continuously variable transmission device for a hub motor in this embodiment includes a main shaft 1, a motor assembly 2, a hub 3, a planetary gear set assembly, and a flywheel 6. The main shaft 1 passes through the hub 3 and is rotatably connected with the hub 3, and the two can rotate relative to each other. The motor assembly 2 is installed inside the hub 3. Multiple rows of planetary mechanisms connected along an axial direction of the planetary gear set assembly are arranged inside the planetary gear set assembly, and the planetary mechanisms are provided with at least two planetary gear sets.

In this embodiment, the two rows of planetary mechanisms are the first planetary gear set 4 and the second planetary gear set 5 respectively. The planetary gear set assembly is sleeved around the main shaft 1 and located on one side of the hub 3 (the right side in Fig. 2). The first planetary gear set 4 is connected to the motor assembly 2, and the first planetary gear set 4 is connected to the hub 3. The second planetary gear set 5 is connected to the flywheel 6. The first planetary gear set 4 and the second planetary gear set 5 are connected to each other. The motor assembly 2 and the flywheel 6 drive the planetary gear set assembly to rotate, thereby driving the hub 3 to rotate.

The motor assembly 2 includes a motor rotor 20 and a motor stator 21; the first planetary gear set 4 includes a first ring gear 40, a first planetary gear 41, a first sun gear 42 and a first planet carrier 43; and the second planetary gear set 5 includes a second ring gear 50, a second planetary gear 51, a second planet carrier 52 and a second sun gear 53, and the first ring gear 40 and the second ring gear 50 are fixed relative to each other. The motor stator 21 is fixedly connected to the main shaft 1, the motor rotor 20 is fixedly connected to the first sun gear 42 of the first planetary gear set 4, and the motor rotor 20 and the first sun gear 42 can rotate relative to the motor stator 21.

The first planetary gear set 4 is sleeved on the main shaft 1 via the first sun gear 42 and the first planet carrier 43, and the second planetary gear set 5 is sleeved on the main shaft 1 via the second planet carrier 52 and the second sun gear 53. Multiple first planetary gears 41 are provided. The first sun gear 42 is located at the center of the first external ring gear 40. The multiple first planetary gears 41 are uniformly arranged between the first sun gear 42 and the first ring gear 40, and mesh with external teeth of the first sun gear 42 and internal teeth of the first ring gear 40. The first planet carrier 43 is provided with multiple planetary gear shafts. The multiple planetary gear shafts of the first planet carrier 43 respectively pass through the multiple first planetary gears 41, each planetary gear shaft passes through a corresponding first planetary gear 41 and is rotatably connected to the corresponding first planetary gear 41. The first planet carrier 43 has one end (the left end in Fig. 2) fixed to one side of the hub 3, and has another end (the right end in Fig. 2) fixedly connected to the second sun gear 53.

Multiple second planetary gears 51 are provided. The second sun gear 53 is located at the center of the second external ring gear 50. The multiple second planetary gears 51 are uniformly arranged between the second sun gear 53 and the second ring gear 50, and mesh with external teeth of the second sun gear 53 and the internal teeth of the second ring gear 50. The second ring gear 50 and the first ring gear 40 are fixedly connected in the axial direction. The first ring gear 40 and the second ring gear 50 are sleeved on outer sides of the first planet carrier and the second planet carrier through corresponding bearings (in the figures, bearings are installed on fixed portions extending inward from an inner side of a transmission housing, and the ring gears are further sleeved outside the bearings) respectively, so that the first ring gear 40 and the second ring gear 50 can rotate relative to the first planet carrier and the second planet carrier. The second planet carrier 52 is provided with multiple planetary gear shafts. The multiple planetary gear shafts of the second planet carrier 52 respectively pass through the multiple second planetary gears 51, and each planetary gear shaft passes through one second planetary gear 51 and is rotatably connected to the corresponding second planetary gear 51. One side of the second planet carrier 52 is fixedly connected to the flywheel 6, a chain is arranged on the outer periphery of the flywheel 6, and the chain further rotates to drive the second planet carrier 52 to rotate.

Specifically, central holes are formed in the middle parts of the first planetary gear 41 and the second planetary gear 51, and bearings are arranged in the central holes. The multiple planetary gear shafts of the first planet carrier 43 and the second planet carrier 52 are cylindrical rods, and the multiple planetary gear shafts of the first planet carrier 43 and the second planet carrier 52 respectively pass through the bearings in the central holes of the corresponding first planetary gear 41 and second planetary gear 51.

Further, the motor stator 21 is sleeved on and fixed to the main shaft 1, and one end of the first sun gear 42 (the left side in Fig. 2) extends into the hub 3 to be in driving connection to the motor rotor 20. One end of the hub 3 (the left end in Fig. 2) is sleeved on the outer periphery of the main shaft 1 and is rotatably connected to the main shaft 1 (the two can rotate relative to each other). The other end of the hub 3 (the right end in Fig. 2) is sleeved on the outer periphery of the first sun gear 42 and is rotatably connected to the first sun gear 42 (the two can rotate relative to each other).

Preferably, a rotational speed sensor is installed on the flywheel 6 or the bottom bracket of the bicycle. The rotational speed sensor is in communication connection with the control system of the power-assisted bicycle via a signal wire, and the motor assembly 2 is electrically connected to the control system of the power-assisted bicycle. The rotational speed sensor feeds back the rotational speed of the flywheel 6 to the control system of the power-assisted bicycle, so that the control system further controls the rotational speed of the motor assembly 2.

It should be noted that the planetary gear set assembly in this embodiment is installed on the main shaft 1 in an enclosed manner via a housing, and the flywheel is located outside the housing and driven by a chain, thereby avoiding cross-contamination between the transmission and environment and improving transmission efficiency during use. In another embodiment, chain driving of the flywheel 6 is eliminated, and belt driving or enclosed shaft driving is used, which can further improve transmission efficiency and reduce environmental pollution.

Both the first planetary gear set 4 and the second planetary gear set 5 in this embodiment are negative-sign mechanisms, which can improve the transmission efficiency of the continuously variable transmission device for a hub motor.

Specifically, according to a working principle of the first planetary gear set 4 and the second planetary gear set 5, a rotational speed relationship among the motor assembly 2, the hub 3 and the flywheel 6 of the continuously variable transmission device for a hub motor is determined by the following formula: ${n}_{MG} + k ∗ {n}_{FW} = \left(1+k\right) {n}_{W}$ where n_{MG} denotes a rotational speed of the motor assembly 2; n_{FW} denotes a rotational speed of the flywheel 6; and n_{W} denotes a rotational speed of the hub 3.

A torque relationship among the motor assembly 2, the hub 3 and the flywheel 6 of the continuously variable transmission device for a hub motor is determined by the following formula: ${T}_{MG} : {T}_{FW} : {T}_{W} = 1 : k : \left(k+1\right)$ where T_{MG} denotes torque of the motor assembly 2; T_{FW} denotes torque of the flywheel 6; and T_{W} denotes torque of the hub 3.

A speed ratio relationship among the motor assembly 2, the hub 3 and the flywheel 6 of the continuously variable transmission device for a hub motor is determined by the following formula: $k = {k}_{1} + {k}_{1} / {k}_{2}$ where k₁ denotes a speed ratio of the first planetary gear set 4; k₂ denotes a speed ratio of the second planetary gear set 5; and k denotes a total speed ratio of the planetary gear set assembly.

Based on the above formulae, in this embodiment, preferably, k₁ = 5 and k₂ = 1.6, then k = 8.125; and n_{MG} + 8.125n , n_{FW} = 9.125n_{W} , and T_{MG}:T_{FW}:T_{W} = 1:8.125:9.125, where when n_{FW} = 0, a maximum speed ratio of the hub 3 to the motor assembly 2 is 9.125.

Further, the first planetary gear set 4 and the second planetary gear set 5 in this embodiment constitute a power split device, and a power flow of the power split device is determined by the following formula: ${P}_{W} = {P}_{MG} + {P}_{FW}$ where P_{W} denotes output power of the hub 3; P_{MG} denotes input power of the motor assembly 2; and P_{FW} denotes input power of the flywheel 6.

The power assist ratio of the continuously variable transmission device for a hub motor is adjusted to adapt to different road conditions. With reference to the above formulae (1) to (4), the power assist ratio of the continuously variable transmission device for a hub motor is determined by the following formula: $λ = \frac{{P}_{MG}}{{P}_{FW}} = \frac{{T}_{MG} ∗ {n}_{MG}}{{T}_{FW} ∗ {n}_{FW}} = \frac{{n}_{MG}}{k ∗ {n}_{FW}} ;$ where λ denotes the power assist ratio.

An operating principle of the continuously variable transmission device for a hub motor is explained below by taking the power-assisted bicycle under low-speed and low-load working conditions as an example.

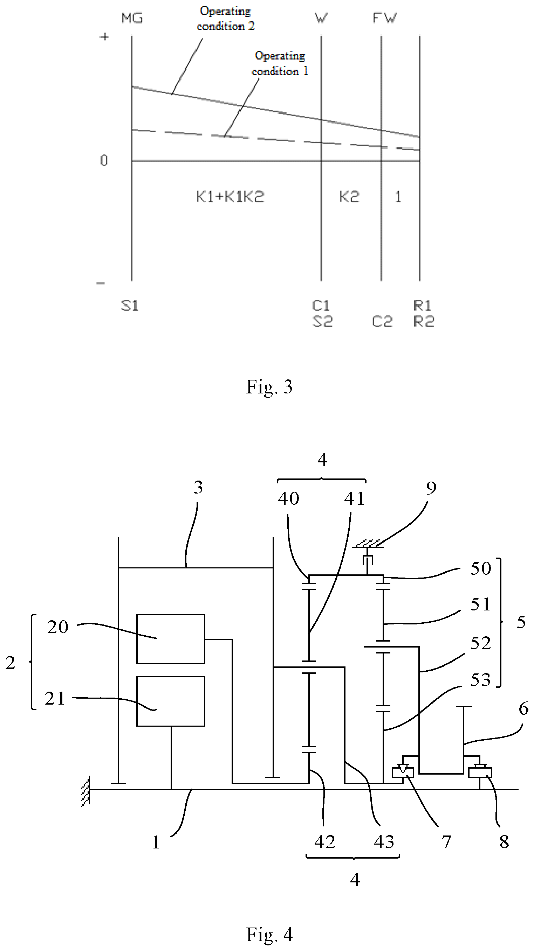

Referring to Fig. 3 in this specification, in Fig. 3, MG denotes the motor assembly 2, W denotes the hub 3, FW denotes the flywheel 6, S1 denotes the first sun gear 42, C1 denotes the first planet carrier 43, R1 denotes the first ring gear 40, S2 denotes the second sun gear 53, C2 denotes the second planet carrier 52, and R2 denotes the second ring gear 50. Operating condition 1 refers to a low-speed balanced condition where when pedaling frequency of the rider increases, that is, the rotational speed of the flywheel 6 rises, the control system detects an intention to accelerate and increases the rotational speed of the motor assembly 2, to put the bicycle into an accelerating state. Operating condition 2 refers to a condition where when the pedaling frequency of the rider is stable, the motor assembly 2 stops increasing its speed, thereby maintaining a current bicycle speed.

The structure in this embodiment can achieve a large speed ratio, and the motor assembly 2 operates at a high speed with low torque, which is beneficial to lightweight design of the mechanism. According to the principle of the formula (n_{MG} + k * n_{FW} = (1 + k)n_{W}), the hub speed of the continuously variable transmission device for a hub motor in this embodiment is jointly determined by the motor speed and the flywheel speed, which can enable continuous stepless adjustment. Based on the principle of the power assist ratio λ ( $λ = \frac{{P}_{MG}}{{P}_{FW}} = \frac{{T}_{MG} ∗ {n}_{MG}}{{T}_{FW} ∗ {n}_{FW}} = \frac{{n}_{MG}}{k ∗ {n}_{FW}}$), for a planetary mechanism with a speed ratio k, λ matches the speed ratio of the motor assembly 2 to the flywheel 6. By controlling the speed ratio of the motor assembly 2 to the flywheel 6, the power assist ratio λ can be adjusted for different road conditions and accelerations.

### Embodiment 2:

With reference to Fig. 4, in addition to all the structures in Embodiment 1, this embodiment further includes a first one-way clutch 7, a second one-way clutch 8, and a brake 9.

The first one-way clutch 7 connects the second sun gear 53 and the second planet carrier 52 respectively, and the second one-way clutch 8 connects the flywheel 6 and the main shaft 1 respectively. Because the second ring gear 50 and the first ring gear 40 are fixedly connected in an axial direction, the brake 9 is connected to both the first ring gear 40 and the second ring gear 50. The brake 9 is in communication connection with the control system of the power-assisted bicycle via a signal wire, to receive a control command from the control system and act accordingly.

The continuously variable transmission device for a hub motor in this embodiment has at least three functions: pure human-powered riding in low speed gear, coasting regenerative power generation, and pure human-powered riding in high speed gear. The first one-way clutch 7 is arranged between the second planet carrier 52 and the second sun gear 53 to add the function of pure human-powered riding in low gear, thereby improving starting response. The second one-way clutch 8 is added between the second planet carrier 52 and the main shaft 1 to realize the function of coasting regenerative power generation. The brake 9 is added on the first ring gear 40 and the second ring gear 50 to add the pure human-powered riding in high speed gear, to meet regulatory requirements in some countries or regions that restrict motor torque output when the bicycle speed exceeds a specified limit.

The first one-way clutch 7, the second one-way clutch 8 and the brake 9 are independent of each other. According to actual needs of users, the first one-way clutch 7, the second one-way clutch 8 and the brake 9 are installed respectively to realize one or more functions.

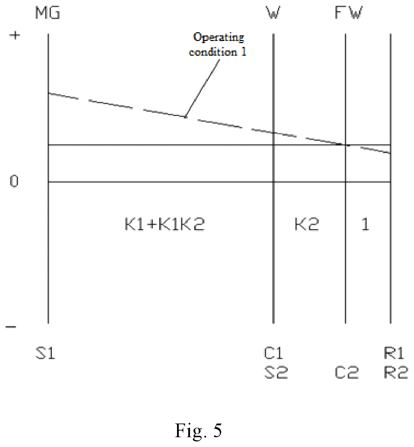

This embodiment is further described below by introducing different operating conditions:
With reference to Fig. 5, the starting condition of the continuously variable transmission device for a hub motor is shown. In such condition, the continuously variable transmission device for a hub motor is equipped with the first one-way clutch 7, the first one-way clutch 7 is in operation, the second one-way clutch 8 is either not installed or in a disengaged state, and the brake 9 is either not installed or in a disengaged state.

At the moment of starting, the rotational speed of the second planet carrier 52 is higher than that of the second sun gear 53, and the first one-way clutch 7 engages, so that the second planet carrier 52 and the second sun gear 53 are fixedly connected. Both the first planetary gear set 4 and the second planetary gear set 5 are in a locked state, so that the flywheel 6 connected to the second planet carrier 52 and the hub 3 connected to the first planet carrier 43 realize direct power transmission. At this time, the total speed ratio k of the planetary gear set assembly is equal to 1, and rotational speeds of the motor assembly 2, the hub 3 and the flywheel 6 are all the same.

In the operating condition 1, the motor assembly 2 recognizes that the bicycle is in the starting state via the control system, and the motor assembly 2 immediately enters a power assist mode. The rotational speed of the motor assembly 2 increases, which drives the rotational speed of the hub 3 to rise. When the rotational speed of the hub 3 exceeds that of the flywheel 6, the first one-way clutch 7 disengages automatically, so that the first planetary gear set 4 and the second planetary gear set 5 enter a power split mode. The hub 3 is driven jointly by the power from the motor assembly 2 and the flywheel 6.

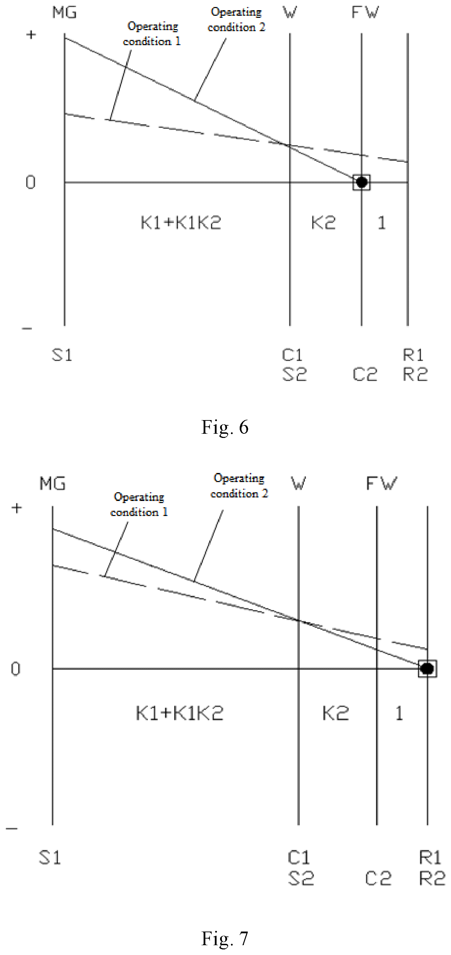

With reference to Fig. 6 in this specification, the coasting regenerative power generation condition of the continuously variable transmission device for a hub motor is shown. In such condition, the continuously variable transmission device for a hub motor is equipped with the second one-way clutch 8, the second one-way clutch 8 engages, the first one-way clutch 7 is either not installed or in a disengaged state, and the brake 9 is either not installed or in a disengaged state.

The operating condition 1 indicates that when the bicycle is ridden at a certain speed, the motor assembly 2 is in the power assist state. When deceleration is required, the rider stops pedaling, the rotational speed of the flywheel 6 becomes zero at this time, and the bicycle enters a coasting state. The motor assembly 2 gradually changes from positive torque to torque of 0 and then enters an idling state. When negative torque is applied to the motor assembly 2, the second one-way clutch 8 engages and locks the flywheel 6 to the main shaft 1, and at this time, the motor assembly 2 generates electricity to recover kinetic energy of the bicycle.

In the operating condition 2, due to the function of the second one-way clutch 8, the flywheel 6 is locked to the main shaft 1 without driving pedals to reverse. Therefore, the regenerative power generation process does not affect a control intention of the rider or riding safety.

With reference to Fig. 7, the condition of the pure human-powered riding in high gear of the continuously variable transmission device for a hub motor is shown. In such condition, the continuously variable transmission device for a hub motor is equipped with the brake 9, the brake 9 engages, and the first one-way clutch 7 and the second one-way clutch 8 are either not installed or in a disengaged state.

The operating condition 1 indicates that the bicycle is ridden at a certain speed in the power assist state. In the operating condition 2, when the bicycle speed reaches an assist limit threshold, the control system controls the brake 9 to engage, thereby stopping the rotation of the first external ring gear 40 and the second external ring gear 50. The control system controls the motor assembly 2 to unload and idle, thereby cutting off the power transmission between the motor assembly 2 and the first sun gear 42. Pedaling force of the rider is transmitted to the flywheel 6 and input into the second planetary gear set 5. The flywheel 6 drives the first planetary gear set 4 and the motor assembly 2 to idle, and power is delivered to the hub 3 through the first planet carrier 43.

Above are merely the embodiments of the present invention, and general knowledge such as the well-known specific structures and characteristics in the solution are not described in excessive details herein. For a person skilled in the art, apparently, the present invention is not limited to the details in the foregoing exemplary embodiments, and the present invention can be implemented in other specific forms without departing from the spirit or basic features of the present invention. Therefore, from all perspectives, the embodiments should be considered to be exemplary and non-limitative. The scope of the present invention is defined by the appended claims other than the foregoing description. Therefore, all changes that fall within the meanings and scope of equivalent elements of the claims are intended to be covered by the present invention. Any reference numeral in the claims should not be construed as limiting the related claims.

## Claims

1. A continuously variable transmission device for a hub motor, comprising a main shaft (1), a motor assembly (2), a hub (3), a planetary gear set assembly, and a flywheel (6), wherein the hub (3), the planetary gear set assembly and the flywheel (6) are sequentially sleeved on the main shaft (1), and the motor assembly (2) is sleeved on the main shaft (1) and located inside the hub (3);
the planetary gear set assembly comprises at least a first planetary gear set (4) and a second planetary gear set (5) connected to each other along its axial direction, and the first planetary gear set (4) and the second planetary gear set (5) comprise a external ring gear, a sun gear positioned at a center of the external ring gear, multiple planet gears disposed between the external ring gear and the sun gear, and a planet carrier respectively;
the motor assembly (2) comprises a motor rotor (20) and a motor stator (21), the motor stator (21) is fixedly sleeved on the main shaft (1), and the motor rotor (20) is connected to the sun gear of the first planetary gear set (4); and
the first end of the sun gear of the first planetary gear set (4) extends into the hub (3) along its axial direction to be in driving connection to the motor assembly (2); the planet carrier of the first planetary gear set (4) has a planet gear shaft extending through internal planet gear of the first planetary gear set (4), a first end of the planet carrier of the first planetary gear set (4) is fixedly connected to a side wall of the hub (3), and its second end is fixedly connected to the sun gear of the second planetary gear set (5); one end of the planet carrier of the second planetary gear set (5) is rotatably connected to internal planet gear of the second planetary gear set (5), and its another end is fixedly connected to the flywheel (6); and the external ring gear of the first planetary gear set (4) is fixedly connected to the external ring gear of the second planetary gear set (5).

2. The continuously variable transmission device for a hub motor according to claim 1, further comprising a first one-way clutch (7) and a second one-way clutch (8);
the first one-way clutch (7) is configured to connect or disconnect the sun gear of the second planetary gear set (5) and the planet carrier of the second planetary gear set (5), and the second one-way clutch (8) is configured to connect or disconnect the flywheel (6) and the main shaft (1); and
the first one-way clutch (7) is used for a starting condition of the continuously variable transmission device for a hub motor, wherein in the starting condition, the second one-way clutch (8) is either not installed or in a disengaged state; and the second one-way clutch (8) is used for a coasting regenerative power generation condition of the continuously variable transmission device for a hub motor, wherein in the coasting regenerative power generation condition, the first one-way clutch (7) is either not installed or in a disengaged state.

3. The continuously variable transmission device for a hub motor according to claim 2, wherein a power assist ratio λ of the continuously variable transmission device for a hub motor is determined by the following formula: $λ = \frac{{P}_{MG}}{{P}_{FW}} = \frac{{T}_{MG} ∗ {n}_{MG}}{{T}_{FW} ∗ {n}_{FW}} = \frac{{n}_{MG}}{k ∗ {n}_{FW}} ;$ wherein λ denotes the power assist ratio; P_{MG} denotes input power of the motor assembly (2); P_{FW} denotes input power of the flywheel (6); T_{MG} denotes torque of the motor assembly (2); T_{FW} denotes torque of the flywheel (6); n_{MG} denotes a rotational speed of the motor assembly (2); n_{FW} denotes a rotational speed of the flywheel (6); and k denotes a total speed ratio of the planetary gear set assembly.

4. The continuously variable transmission device for a hub motor according to claim 3, wherein the total speed ratio k of the planetary gear set assembly is determined by the following formula: $k = {k}_{1} + {k}_{1} / {k}_{2}$ wherein k₁ denotes a speed ratio of the first planetary gear set (4); and k₂ denotes a speed ratio of the second planetary gear set (5).

5. The continuously variable transmission device for a hub motor according to claim 4, wherein a rotational speed relationship among the motor assembly (2), the hub (3) and the flywheel (6) of the continuously variable transmission device for a hub motor is determined by the following formula: ${n}_{MG} + k ∗ {n}_{FW} = \left(1+k\right) {n}_{W}$ wherein n_{MG} denotes a rotational speed of the motor assembly (2); n_{FW} denotes a rotational speed of the flywheel (6); and n_{W} denotes a rotational speed of the hub (3).

6. The continuously variable transmission device for a hub motor according to claim 4, wherein a torque relationship among the motor assembly (2), the hub (3) and the flywheel (6) of the continuously variable transmission device for a hub motor is determined by the following formula: ${T}_{MG} : {T}_{FW} : {T}_{W} = 1 : k : \left(k+1\right)$ wherein T_{MG} denotes torque of the motor assembly (2); T_{FW} denotes torque of the flywheel (6); and T_{W} denotes torque of the hub (3).

7. The continuously variable transmission device for a hub motor according to claim 3, wherein the first planetary gear set (4) and the second planetary gear set (5) constitute a power split device, and a power flow of the power split device of the continuously variable transmission device for a hub motor is determined by the following formula: ${P}_{W} = {P}_{MG} + {P}_{FW}$ wherein P_{W} denotes output power of the hub (3); P_{MG} denotes input power of the motor assembly (2); and P_{FW} denotes input power of the flywheel (6).

8. The continuously variable transmission device for a hub motor according to claim 1, wherein a bearing is disposed in a central hole of the planetary gear of the first planetary gear set (4), the planet carrier of the first planetary gear set (4) is provided with multiple planetary gear shafts, the multiple planetary gear shafts are cylindrical rods, and the multiple planetary gear shafts respectively pass through central holes of the planetary gears of the first planetary gear set (4); and
the planetary gear and planet carrier of the second planetary gear set (5) have the same connection structure as the planetary gear and planet carrier of the first planetary gear set (4).

9. The continuously variable transmission device for a hub motor according to claim 2, further comprising a brake (9), wherein the brake (9) is connected to both a external ring gear of the first planetary gear set (4) and a external ring gear of the second planetary gear set (5); and
the brake (9) is used for a high-speed pure human-powered riding condition of the continuously variable transmission device for a hub motor, wherein in the high-speed pure human-powered riding condition, the first one-way clutch (7) and the second one-way clutch (8) are either not installed or in a disengaged state.
